# EUROPEAN PATENT SPECIFICATION

(11) **EP 2 476 635 B1**
(45) Date of publication and mention of the grant of the patent: **23.10.2013**
(21) Application number: 11151261.2
(22) Date of filing: 18.01.2011
(51) Int. Cl.: B65G 1/02

(54) **Storage rack with movable shelves**
Lagerregal mit beweglichen Regalbrettern
Bâti de stockage doté d'étagères amovibles

(43) Date of publication of application: 18.07.2012
(73) Proprietor: Deutsche Post AG, 53113 Bonn (DE)
(72) Inventor: Tencer, Richard, 05725-050Vila Andrade, Sao Paulo (BR)
(74) Representative: Raasch, Detlef

(56) References cited:
- CH-A5- 664 340
- NL-A- 8 800 623
- US-A- 5 782 317

## Description

### Field of the invention

The invention relates to the field of storage racks with movable shelves according to the preamble of claim 1 and to storage systems comprising such storage racks to improve the efficient use of available storage space. The invention further relates to methods to operate such storage racks and such storage systems.

### Background of the invention

As an example logistic terminals apply storage racks to store objects for a certain time period at a certain place from which the objects will be removed after a while to be transported to a destination. Typically a large number of objects arrive at the storage racks to be loaded into the storage racks while simultaneously a large number of objects have to be removed from the storage racks to leave the logistic terminal again. Common racks with shelves stationary mounted with a predefined minimum distance between neighboring shelves provide a storage space per shelve typically designed to be sufficient for large objects, e.g. a loaded standard pallet. In case of varying sizes of the to-be-stored objects, some of the shelves only carrying small objects occupying only a small portion of the storage space provided by this shelf. Since the small objects still occupying the shelf area preventing other objects to be placed onto the same shelf, a large storage volume keeps unused. Storage space is a cost driver in logistic processes and therefore should be used most effectively.

US 5211296 discloses a storage rack with horizontal means suitable to receive support plates carrying objects to be stored within the storage rack. However, the distance between neighboring horizontal means can only be varied within a certain range by adjusting two pairs of rods connecting neighbored horizontal means with a motor driven screw. In case of this rack being fully loaded, any removal of two or more support plates from different locations within the storage rack provides unoccupied storage spaces separated from each other. Unfortunately the mounting of the horizontal means prevents any merging of the unoccupied separate storage spaces to one big unoccupied storage space suitable to accommodate a large object or to totally remove the unoccupied separate storage spaces between loaded shelves from the storage rack. It is desired to use the available storage space within a storage rack effectively and as variable as possible allowing the storage of a random sequence of objects with different sizes to be loaded into the storage rack.

Document US 5 782 317 discloses a storage rack as stated in the preamble of claim 1.

### Summary of the invention

It is an object of the invention to provide a storage rack enabling an effective and variable use of the available storage space to be loaded with objects.

This object is achieved by a storage rack with multiple movable shelves as stated in claim 1.

The term "storage rack" denotes any rack suitable to store objects. As an example, such storage racks could be equipment racks, pallet racks or any other kind of racks considered by skilled people. Objects to be loaded into such storage racks could be any kind of objects suitable to be placed on top of a shelf, for example single items, boxes, loaded pallets, containers etc. The term shelf denotes any rigid support suitable to carry objects, preferably on its top surface. The shelf according to the present invention may be a board, a tray, a grating, an arrangement of beams or any other suitable support suitable to carry objects. The frame of the storage rack is established by support uprights, which are fixed together, e.g. with horizontal, vertical, or traverse beams, to provide a stable storage rack. Common shelves have rectangular shapes; subsequently four support uprights establish a typical storage rack, where one support uprights is arranged in each corner of the selves. In embodiments, size and shape of the shelves and the number of support uprights may vary. Uprights according to the present invention may be any kind of posts, poles, or any other kind of member arranged vertically with respect to a ground floor, where the storage rack is placed on top. The storage rack according to the present invention enables an effective and variable use of the available storage space provided by the storage rack. In particular, any occurring separate empty storage space after the removal of the objects from a previously loaded shelf can be rearranged by removing the empty shelf from its position between neighboring loaded shelves. The loaded shelves above the removed empty shelf are moved downwards subsequently in order to occupy the previously empty storage space providing another empty storage space at a location above the highest loaded shelf in this storage rack for further loading. The removed shelf will be fed again into the storage rack at the top section in order to maintain the same number of available shelves within the same storage rack. The storage rack in accordance to the present invention enables a simple and variable re-arrangement of shelf positions in order to use the storage space effectively. The sensors used to adjust the loading position of a shelf might be common sensors suitable to determine distances or to detect the top surface of objects in another manner. The adjusted loading position for the non-loaded shelf moved from the top section to the storage area still has a minimum distance to the shelf below large enough to prevent any damage of the objects loaded to the shelf underneath the moved shelf. For example, a suitable minimum distance is about 10 cm.

The first moving means may be provided as a chain-like mechanism with a driver or actuator. Alternatively the first moving means may denote a system comprising a moving controller and individual moving means mounted to each shelf controlled by the moving controller, e.g. small individually addressable wheel drives moving the shelves along cylindrically shaped support uprights. In an embodiment the first moving means is adapted to move the shelves loaded with objects above the unloaded shelf again into the minimum distance above the objects loaded on top of the shelves being underneath in response of a trigger signal after the unloaded shelf has been removed. In another embodiment the first moving means are adapted to move the next non-loaded movable shelf from the top section into the minimum distance above the objects loaded on top of the shelf being underneath the moved shelf in response of a trigger signal after the underneath shelf has being loaded with objects. In another embodiment, both previous embodiments are applied in the same storage rack. The moving means move the shelves in response to a trigger signal from at least one sensor indicating any change of the loading situation, e.g. provided by the sensors for adjust the shelves in the loading positions. The trigger signal of these sensors might be a detected change of height underneath the lowest shelf present in the top section detected by the sensor present in the lowest shelf. This change of height will occur after loading a non-loaded shelf with objects or in case of a previously being empty storage rack by placing objects on top of the bottom level of the storage rack. The bottom level might be the bottom floor or a non-loaded shelf arranged on top of the bottom floor. Alternatively, the trigger signal might be send-out from sensors detecting objects passing a photoelectric barrier as a trigger that something is loaded into the storage rack. In another embodiment, the trigger signal (e.g. from another photoelectric barrier or from other sensor means related to the removing means removing the unloaded shelf) indicates, that an unloaded shelf is removed from the storage area of the support uprights and subsequently the first moving means adjust the shelves in the loading positions or the corresponding positions at a minimum distance to the loaded shelf underneath in case of still being loaded to fill the gap caused by the removed unloaded shelf. The trigger signal for the first moving means might also be provided by a storage system connected to the moving controller via a data connection providing information of objects removed from the storage rack or objects to be loaded into the storage rack soon.

In an embodiment the storage rack further comprises at least one return upright in order to remove the unloaded shelves from the storage area of the support uprights and to return the removed shelves to the top section of the support uprights. The return upright may have a similar or essentially equal shape as the support upright, since the same shelves have to by moved with support and return uprights. In an embodiment the removal of an unloaded shelf out of the storage area of the storage rack may be executed in response to a removal trigger signal. Such removal trigger signal is provided, when the previously loaded shelf is unloaded and therefore is ready for removal. Such removal trigger signals might be provided from a weight sensor detecting that no load is present on the shelf. Alternatively, the removal trigger signal may result from a comparison of the positions of two neightbored shelfs, where the lower shelf is an unloaded empty shelf. In case of the adjusted minimum distance of the heighter shelf in accordance to the sensors equals the distance between both selves, the lower shelf is proven to be empty and therefore can be removed from the suport uprights leading to sending-out the removal trigger signal. The comparison of the two positions might be executed by the controller of the first moving means or by another removal controller also controlling and performing the removal process to the return upright. The number of required return uprights depends on the lay-out of the return uprights and the process to insert the returned shelves into the top section of the support uprights. In one embodiment, the return uprights are arranged in the same way as the support uprights, where the unloaded shelf is returned to the top section of the suppport uprights in a horizontal position. This has the advantage, that the inserting process of the returned shelves into the support shelves only requires a simple horizontal movement. In another embodiment, the returned shelves are transported in a vertical position, where the vertical position is changed in a horizontal position close to the top section, e.g. via pulling the returned shelves across a horizontal bar forcing the shelves back to a horizontal alignment. The latter embodiment has the advantage, that the return process can be executed within a small return area behind the storage rack. In case of multiple storage racks arranged in a storage area, a single arrangement of return upright may execute the return process for all of the storage racks.

In a preferred embodiment the at least one return upright comprises a second moving means to move the removed shelves to the top section of the support uprights. With this second moving means, the removed shelves can be lifted to the top setion of the support uprights easily and fast. The second moving means may be provided in the same or in a similra manner as the first moving means. In another preferred embodiment the at least one return upright is arranged outside the storage area in order not to affect the loaded shelves within the storage area during returning the unloaded shelves along the return uprights. The return path of the removed shelves should be outside the storage area, otherwise present loaded shelves may hamper the return process of the removed shelves. The return uprights might be arranged in a distance to the support uprights being at least larger than the thickness of the shelves.

In another embodiment the sensors are arranged as a vertical linear array in at least one of the support uprights. In a preferred embodiment the distance between neighbored sensors is the minimum distance. Preferably the sensors are photoelectric barriers to detect the height of the loaded objects easily. Here the sensor comprises a light source and a light detector to establish a photoelectric barrier. Corresponding light sources and light detectors might be arranged on the opposite support uprights at the same height. Photoelectric barriers are cheap sensors and can be installed and operated easily.

In another embodiment at least one of the sensors suitable to detect distances is arranged at a sensor side of each of the movable shelves, where the sensor side of the movable shelf faces downwards at least after entering the storage area. Here, the sensor is assigned to the shelf, which enables the use of the sensor equipped shelves for different types of support uprights without any need of adapting any sensor arrangement. Furthermore the minimum distance to the loaded objects underneath can be adjusted very accurately, since the sensor signal does not depend on any geometrical properties of the sensor arrangement like a sequence of photoelectric barriers arranged at the support uprights in a certain distance to each other. With a sensor present in or at the shelf, the minimum distance can be chosen smaller providing an even more effective use of the available storage space. An example of a suitable sensor is a laser diode detecting distances in response of the reflected laser light, e.g. frequency modulated DBR laser diodes having a working distance of several tens of centimeters and a good accuracy.

In another embodiment, at least two sensors suitable to detect distances are arranged at a sensor side of each of the movable shelves. One of these sensors might be arranged at the edge of the shelf in order to detect the a first distance to the upper surface of the next shelf underneath the moved shelf, where the area for determining the first distance is not occupied by objects and the other sensor(s) are arranged to detect the distance to the upper surface of the objects loaded onto this shelf. In case of a first distance equals the detected distance of the other sensors, the shelf underneath is recognized as being empty (unloaded). A remove trigger signal to remove the unloaded shelf might be generated from this kind of comparison.

In a preferred embodiment the sensor side comprises an array of sensors. An array of sensors is able to detect the object with the highest height out of an arrangement of multiple objects loaded to the shelf causing a certain topology of heights present on the shelf. The array of sensors is able to prevent any contact between the non-loaded moved shelf and the object with the highest height below. To adjust the shelf in the loading position, the sensor indicating the highest loading position will overrule the signals of the other sensors. In a more referred embodiment the distance between neighbored sensors is smaller than the minimum size of the objects parallel to the sensor side. The minimum size of the objects may be derived from typical object sizes commonly stored in the storage rack.

The sensors of all previous embodiments might be connected via a data connection to a computer system controlling the storage rack and the loading, unloading and removal processes.

The invention further relates to a storage system comprising at least one storage rack as claimed in the present invention, a computer system connected to the storage rack in order to recognize an available storage space within the storage rack suitable for being loaded with objects and to assign an object to be loaded into the storage rack having sufficient storage space, and a communication system connected to the computer system in order to guide the to-be-loaded object to the assigned storage rack.

The computer system might be a common computer system connected to the storage rack via a data connection such as data cables or a wireless data connection such as WLAN. The available storage space in a storage rack might be determined from the position of the non-loaded movable shelf adjusted at the loading position. The computer system can derive the available storage space from this loading position and the total height of the storage area of the storage rack. Alternatively the distance between the lowest shelf within the top section and the objects on top of the highest loaded shelf is determined by the sensors of the storage rack and submitted to the computer system. The data of available storage space per rack will be updated in case of objects removed from a shelf and subsequently a removal of the unloaded shelf is carried out. From a comparison of the available storage space with the size of the object to be loaded into the storage rack, the computer system is able to assign the considered object to a certain storage rack. The assignment might be carried out by automatically routing the object to the assigned storage rack in case of a present automatic transport system for loading the storage racks with objects. Alternatively in case of pallet racks loaded via forklifts, the assignment might be displayed on a display inside the forklift. In other embodiments, the objects might be labeled with stickers (e.g. RFID-tags) indicating the assigned storage rack. People skilled in the art may consider other ways to assign an object to a certain storage rack. The communication system to guide the to-be-loaded object to the assigned storage rack might be a routing system within an automatic transport system for loading the storage racks, or might be the display in the forklift connected to the computer system in order to receive an assignment message for the object specifying the assigned storage rack. Alternatively, the communication system might be any other visual or audible system to guide either the object or the transport means or the people carrying the object to the assigned storage rack. The storage system in accordance to the present invention enables an effective and variable use of the available storage space provided by the storage rack since the available space of all available storage racks is managed in order to assign the right storage rack to the right object. This could be achieved by selecting the storage racks with a available space equal or marginal larger than the object size or by selecting the storage racks with an available space much larger than the object size to enable to load this storage rack with additional objects. In an embodiment the computer system is suitable to control the first and/or second moving means and the sensors to ensure a safety movement of shelves within the storage area and a safety removal process of the unloaded shelf. In particular the computer system provides the trigger signals for the first moving means and the removal trigger signals to remove the shelves from the storage racks. In an embodiment the storage system further comprises size detection means connected to the computer system in order to determine the size of the object to be loaded into the storage rack before assigning the object to one of the storage racks. In this case also objects can be assigned to storage racks, where no information of the object size is available for the computer system in beforehand. The size detection means may be any suitable means for detecting sizes, e.g. a three-dimensional scanner or a gate with photoelectric barriers arranged at least in the vertical direction to determine the heigt of the object. The size detection means may also comprises RFID-reading means. The computer system might be connected to the size detection means via a data connection such as data cables or a wireless data connection such as WLAN.

In another embodiment the storage rack comprises indication means to indicated the assigend storage rack to support guiding the objects to the assigned storage rack. Such indication means might be visual and/or audible indication means such as signal lamps or loudspeakers.

The invention further relates to a method to operate a storage rack as claimed in the present invention comprising the steps of
- storing non-loaded movable shelves able to be loaded with objects in a sequence in a top section of multiple support uprights adapted to guide and support the movable shelves along the support uprights of the storage rack;
- moving the non-loaded movable shelf being in the closest position to a storage area of the support uprights below the top section downwards along the support uprights to a loading position within the storage area with first moving means;
- adjusting the loading position of the movable shelf at a certain minimum distance above the objects loaded on top of the shelf being underneath the moved shelf with sensors arranged within the storage rack;
- removing unloaded shelves previously being loaded with objects in its loading position from the support uprights; and
- placing the removed shelves into the top section of the support uprights again, preferably by returning the removed shelves to the top section of the support uprights via at least one return upright, more preferably the return upright comprising a second moving means to move the removed shelves to the top section of the support uprights.

The method to operate a storage rack as claimed in the present invention enables an effective and variable use of the available storage space provided by the storage rack.

In an embodiment of the method the step of adjusting the loading position of the movable shelf is performed with the sensors arranged as a vertical sequence in at least one of the support uprights with the minimum distance as the distance between neighbored sensors, or with sensors arranged at a sensor side of each of the movable shelves, where the sensor side faces downwards at least after entering the storage area.

The invention further relates to a method to operate a storage system as claimed in the present invention comprising the steps of
- recognizing an available space within the storage rack suitable for being loaded with objects with a computer system connected to the storage rack;
- assigning an object to be loaded to the storage rack having sufficient space for being loaded with the object by the computer system; and
- guiding the object to the assigned storage rack with support of a communication system connected to the computer system.

The method to operate a storage system as claimed in the present invention enables an effective and variable use of the available storage space provided by the storage rack.

### Brief description of the drawings

These and other aspects of the invention will be apparent from and elucidated with reference to the embodiments described hereinafter.

In the drawings:
- Fig. 1:: an embodiment of the storage rack according to the present invention.
- Fig. 2:: adjusting the shelf to the loading position in the storage rack as shown in fig.1.
- Fig.3:: loading the storage rack of fig.2 with objects.
- Fig.4:: removing and returning an unloaded shelf in the storage rack according to the present invention.
- Fig.5:: side view of the backside of the storage rack according to the present invention.
- Fig.6:: two embodiments of shelves used in the storage rack according to the present invention.
- Fig.7:: an embodiment of a storage system according to the present invention.

### Detailed description of embodiments

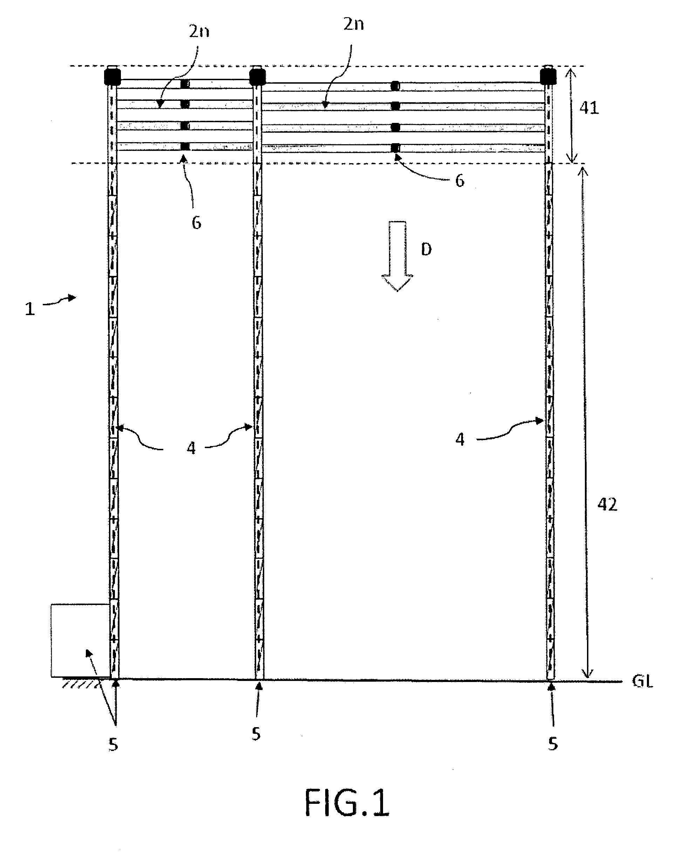

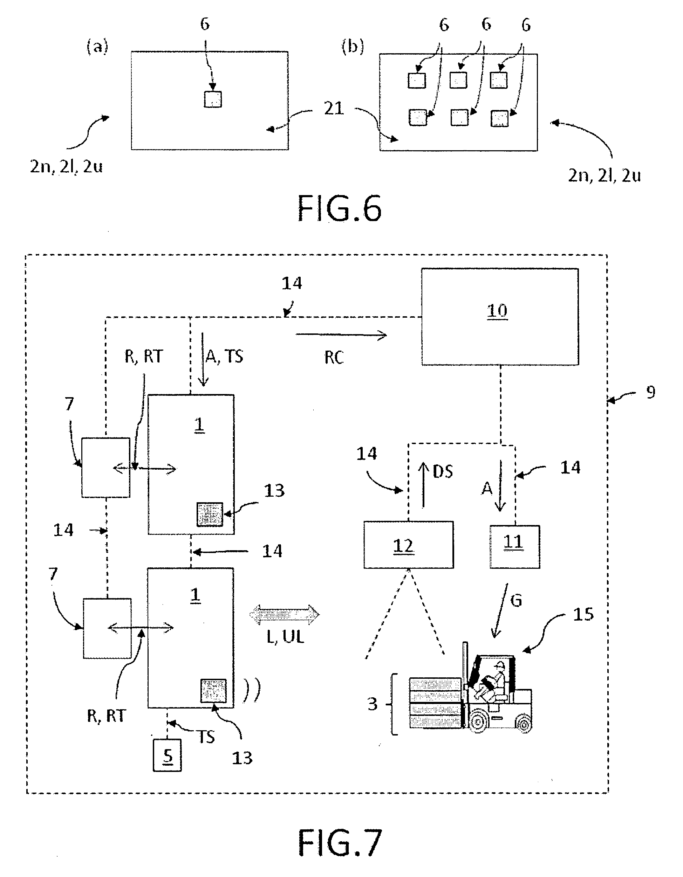

Fig. 1 shows an embodiment of the storage rack 1 according to the present invention with four movable shelves 2n suitable to be loaded with objects 3 arranged in a rack frame with support uprights 4 in a front view. The front view is the view from the side, from which the objects 3 are loaded into the storage rack 1. The support uprights 4 guide and support the movable shelves 2n. The support uprights 4 comprise a top section 41 to store the non-loaded shelves 2n in a sequence and a storage area 42 below the top section 41 and first moving means 5 to move the movable shelves 2n at least downwards D along the support uprights 4. In this embodiment the first moving means 5 are arranged inside the support upright 4 suitable to support the shelves 2n, 2l during movement and in its loading position LP after adjusting the shelves to this position. Here the first moving means 5 further comprises a moving means controller indicated as a box in the lower left part of the figure. The storage rack 1 is arranged on top of a bottom of a building, here denoted as ground floor level GL. However, the storage rack may also be installed in other floor levels, in the basement of a building or elsewhere. In this embodiment shown in fig.1 the shelves comprise one or more sensors 6 arranged at the sensor side of the selves. For the sake of clarity, only one sensor per shelf arranged in the middle of the edge of the shelf is shown. The displayed location of the sensor at the edge of the self is also made only for sake of clarity. To execute this embodiment, the sensors have to be arranged on the side of the shelves facing downwards, see also fig. 6. As an example, two storage racks with different widths are arrangement side by side in fig.1. The two racks may be operated by the same first moving means or comprise separate moving means for each of the storage racks.

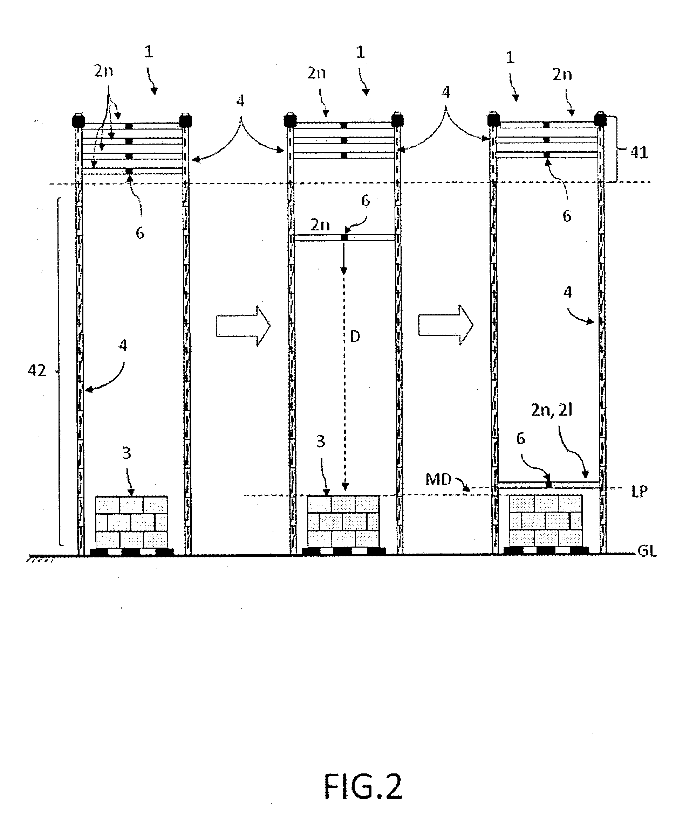

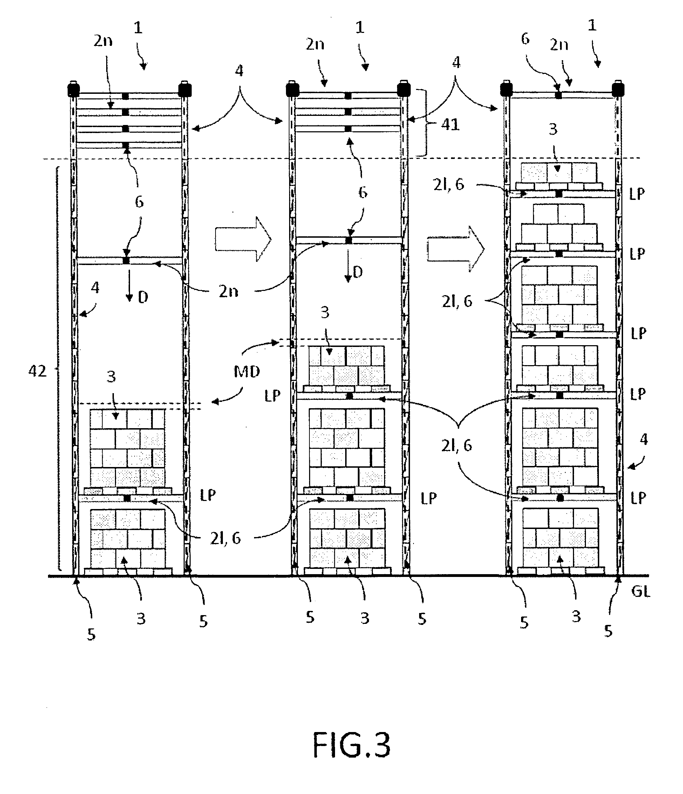

Fig.2 shows the adjustment of a shelf 2n to the loading position LP in a storage rack 1 as shown in fig.1 in a chronological sequence from objects 3 just loaded on top of the ground level of the storage rack followed by starting the adjustment of the non-loaded movable shelf 2n, and followed by the non-loaded shelf 2n, 2l being in the loading position LP ready for being loaded with objects 3. The horizontal big arrows between the storage racks 1 in fig.3 only indicate the chronological sequence of the figure parts. In the left part of figure 2, the objects 3 are stored on top of the ground level since for the lowest objects no shelf is required (the ground level serves as a shelf). The first moving means (not shown here) are adapted to move the non-loaded movable shelf 2n being in the closest position to the storage area 42 downwards D long the support uprights 4 to the loading position LP within the storage area 42. The loading position is a position having a minimum distance MD between lower side of the moved shelf and upper side of the objects 3. After adjusting the non-loaded shelf 2n in the loading position LP, the shelf 2n, 2l is ready for being loaded with objects 3. The sensor(s) 6 of the selves 2n adjust the loading position LP by detecting a certain minimum distance MD above the objects 3. The sensor signal will be processed by the first moving means in order to stop the moving shelf 2n at the loading position LP.

Fig. 3 shows the further loading of objects 3 into the storage rack 1 as previously shown in fig.2. The horizontal big arrows between the storage racks 1 in fig.3 only indicate the chronological sequence of the figure parts. The non-loaded shelf 2n of figure 2 adjusted in the loading position LP is further loaded with objects 3 in the left part of figure 3. The non-loaded movable shelf 2n now in the closest position to the storage area 42 moves downwards D along the support uprights 4 to the loading position LP within the storage area 42. The loading position LP is again the position having a minimum distance MD between lower side of the moved shelf 2n and upper side of the objects 3. After adjusting the non-loaded shelf 2n in the loading position LP, also this shelf 2n is ready for being loaded with objects 3. The sequence of moved shelves in principal repeats as shown in the middle part of fig.3, where the next non-loaded shelf 2n within the top section 41 is moved downwards D to its loading position LP. The procedure of moving a non-loaded shelf 2n down to its loading position LP, loading the shelf 2n with objects 3 to obtain a loaded shelf 2l and moving the next non-loaded shelf 2n down to its loading position LP to establish the next higher loading level may continue until the storage rack 1 is fully loaded with objects 3 up to the top section 41. The storage rack 1 should not be loaded further not to hamper returning unloaded shelves 2u to the top section 41.

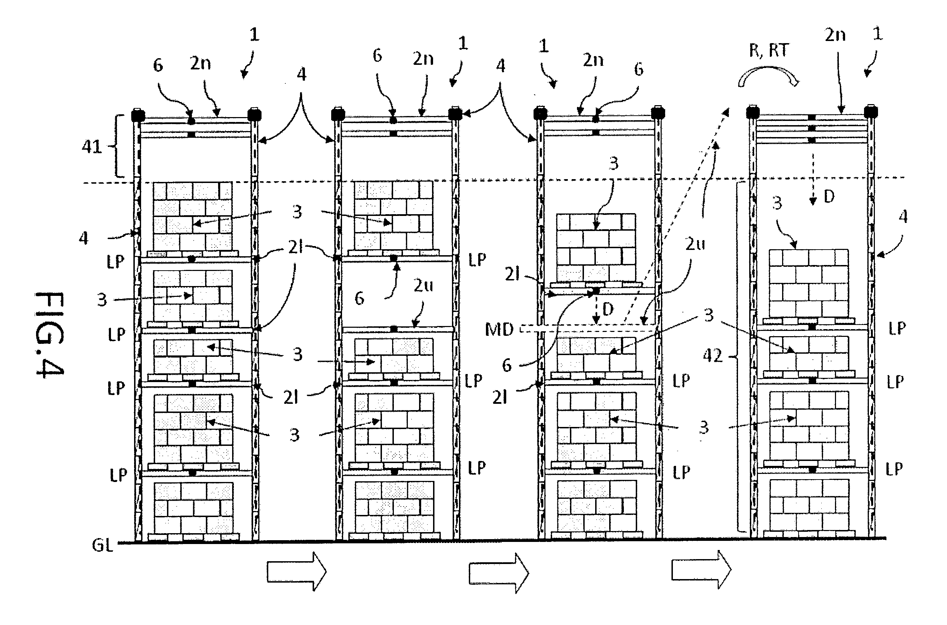

Fig.4 shows an embodiment of the removal R of an unloaded shelf 2u out of the support uprights 4 and the returning RT of the unloaded shelf 2u into the top section 41 of the storage rack 1. The horizontal big arrows between the storage racks 1 in fig.4 only indicate the chronological sequence of the figure parts. In the left part the storage rack 1 is fully loaded with objects 3. There is no further available storage space. Therefore only objects 3 can be removed from the storage rack 1 as indicated in the next following part of fig.4, where an unloaded shelf 2u is present between loaded shelves 2l. The objects 3 within the shown storage rack 1 can be taken out from any shelf 2l on demand. Therefore the unloaded shelf 2u in fig.4 is only one example of an unloaded shelf 2u. The sensor(s) 6 of the shelf 2l above the unloaded shelf 2u either detects, that the shelf 2u underneath in unloaded and generates a removing trigger signal to remove the unloaded shelf 2u or the unloading process itself may generate the removal trigger signal, e.g. via a weight sensor (not shown here) as part of the shelves 2n, 2l, 2u or via an external event. An external event might the removed (taken-out) objects pass a photoelectric barrier or the storage system receives a taken-out message for a particular object and sends a removal trigger signal in response to the storage rack 1, However, the unloaded shelf 2u is removed from the support uprights 4 as indicated by the dashed lines 2u in the third part of fig.4. The removal R transfers the unloaded shelf 2 to return uprights (not shown here) in order to return RT the unloaded shelf 2u to the top section 41 of the support uprights 4 as indicated by the dashed arrow and the curved arrow. The loaded shelves 2l below the unloaded shelf 2u remain in their adjusted loading positions LP. After (or simultaneously to) returning of the unloaded shelf 2u into the top section 41, the present gap between loaded shelves 2l will be eliminated by moving the loaded shelves 2l above the present gap downwards until the loaded shelves 2l reach their loading positions LP with respect to the loaded shelves underneath. Since the loaded shelves 2l are always adjusted in a minimum distance MD above the loaded shelf 2l underneath, all occurring empty storage spaces are collected above the highest loaded shelf 2l via the shown re-arrangement of the loaded shelves 2l. Therefore the storage rack 1 offers the most effective use of available storage space even for dynamic loading and unloading of objects into/from the storage rack 1.

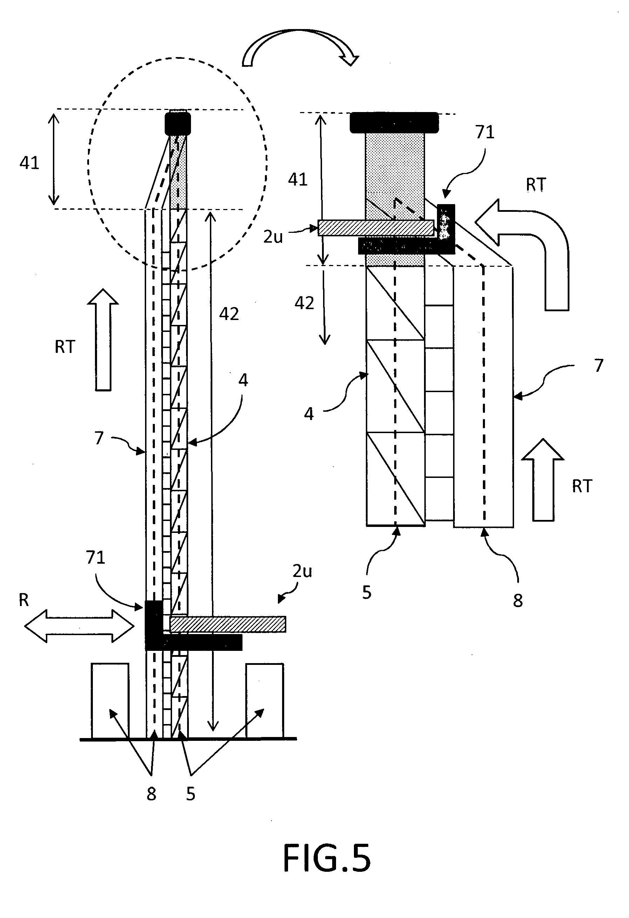

Fig.5 shows an embodiment of a shelf used in the storage rack according to the present invention, where the return uprights 7 return RT the removed R unloaded shelves 2u to the top section 41 of the support uprights 4. The arrangement of the return uprights 7 is only schematically indicated in Fig.5. The arrangement of return uprights 7 might comprise return uprights 7 arranged in a similar manner as the support uprights 4 to return the removed shelves 2u back to the top section, e.g. in a horizontal position. In other embodiments, the return process RT might be executed in a different way and/or with a different orientation of the unloaded shelves 2u. The return upright 7 comprise a second moving means 8 to move the removed shelves 2u to the top section 41. In this embodiment the return upright 7 is arranged behind the storage area 42 in order not to affect the loaded shelves 2l within the storage area 42 during returning RT the unloaded shelves 2u along the return uprights 7. The removal process R might be executed by pulling the unloaded shelf 2u to the backside of the support uprights 4 out of the support uprights 4. The backside denotes the side of the support uprights 4 opposite to the front side. The pulling might be performed by noses or hooks reaching into one or more grid shaped straps extending horizontally from the shelf 2n, 21, 2u to the backside of the storage area 42. The second moving means 8 may also support the removal process R by slightly lifting the unloaded shelf 2u in a release position within the storage area 42 resulting in a shelf 2u sliding out of the support uprights 4. In another embodiment of the removal process R, the return uprights 7 comprise at least two shelf carrying legs 71 (e.g. shelf brackets fixed to the return uprights) which are moved inside the storage area 42 under the unloaded shelf 2u, then the shelf carrying legs 71 are moved upwards by the second moving means 8 about a sufficient distance, e.g. of 1 cm, to release the unloaded shelf 2u from the support uprights 4 followed by moving the released shelf 2u out of the support uprights 4. In the side view of figure 5 only one shelf carrying legs 71 is shown. The shelf carrying legs 71 may by L-shaped with the long leg as leg carrying the shelf 2u. The long leg may have a length of about the depth of the shelves 2n, 2l, 2u. The shelf carrying legs 71 are mounted within the return upright suitable to be moved horizontally in and out of the storage area 42 of the support uprights 4. The shelf carrying leg 71 may transport the unloaded and removed shelf 2u upwards to the top section 41 of the support uprights 4 and insert the shelf 2u into the support uprights 4 with a process comprising the inverted steps of the previously described removal process R. People skilled in the art are able to consider alternative removal arrangements within the scope of the present invention. The first and second moving means 5, 8 might be arranged in the support uprights 4 and the return uprights. The first and second moving means 5, 8 may comprise moving controllers as indicated by the small boxes at the bottom part of the uprights 4, 7. The support and return uprights 4, 7 might be made of a rigid material, e.g. metal. The same material might be used for the shelves 2n, 2l, 2u. People skilled in the art may also use other materials within the scope of the present invention.

Fig.6 shows two embodiments (a) and (b) of a shelf 2n, 2l, 2u used in the storage rack 1 according to the present invention. The shelf 2n, 2l, 2u in embodiment (a) has one sensor suitable to detect distances arranged at a sensor side 21 facing downwards D at least after entering the storage area 42. In embodiment (b) the sensor side 21 comprises an array of sensors 6 with a distance between neighbored sensors 6 smaller than the minimum size of the objects 3 parallel to the sensor side 21. The array of sensors 6 is able to recognize a certain topology of height in case of multiple objects 3 with different height present on top of one shelf 2l.

Fig.7 shows an embodiment of a storage system 9 according to the present invention comprising two storage racks 1, a computer system 10 connected to the storage racks 1 with data connections 14 in order to recognize RC the available storage space within the storage racks 1, a size detection means 12 connected to the computer system 10 with data connection 14 in order to determine the size of arriving objects 3 to be loaded into the storage rack 1. An arriving object 3 (here transported with a forklift 15) is scanned with the size detection means 12 (indicated by dashed lines) and the determined size DS is submitted to the computer system 10. In alternative embodiments the size of the objects may be determined by reading information comprising size data from the objects, e.g. by reading RFID tags comprising size information. Therefore the size detection means may be also arranged as RFID readers or equipped with RFID readers additional to other size detection components. Subsequently the object 3 is assigned A to a storage rack 1 having sufficient storage space. The communication system 11 also connected to the computer system 10 via data connections 14 guides G the to-be-loaded object 3 to the assigned storage rack 1. The assigned storage rack 1 might be communicated to the driver of the forklift 15 via a wireless communication device. For further guiding G the storage racks 1 may comprise one or more indication means 13 to indicate the assigend storage rack 1 to the transport stuff, e.g. a signal lamp or a horn.

The storage racks 1 might be fully operated via the computer system 10 of the storage system 9, where non-loaded movable shelves 2n able to be loaded with objects 3 are stored in a sequence in a top section 41 of multiple support uprights 4 adapted to guide and support the movable shelves 2n, 2l, 2u along the support uprights 4 of the storage rack 1, moved to a storage area 42 of the support uprights 4 below the top section 41 downwards D along the support uprights 4 to a loading position LP and adjusted at the loading position LP being a certain minimum distance MD above the objects 3 loaded on top of the shelf 2l underneath the moved shelf 2n. The sensors arranged within the storage rack 1 provide a distance signal to adjust the loading position. In case of objects taken out of the storage rack 1 unloaded shelves 2u previously being loaded with objects 3 in its loading position LP are removed from the support uprights 4 in response to a trigger signal provided by the computer system 10 after recognizing, that an object was taken out. The computer system 10 comprises a warehouse managing system to control ingoing and outgoing objects 3 as well as storage racks 1 and available storage spaces within the storage racks 1. After objects 3 have been taken out, the unloaded shelf 2u is removed R from the support uprights 4 of the particular storage rack 1 and returned RT to the top section 41 of the support uprights 4 again. Here, each of the storage racks 1 comprises return uprights 7.

While the invention has been illustrated and described in detail in the drawings and foregoing description, such illustration and description are to be considered illustrative or exemplary and not restrictive; the invention is limited by the appended claims.

**List of reference numerals**
- 1: storage rack
- 2n: non-loaded movable shelves
- 2l: loaded movable shelves
- 2u: unloaded shelves
- 21: sensor side of the shelves
- 3: objects
- 4: support uprights
- 41: top section of support uprights
- 42: storage section of support uprights
- 5: first moving means
- 6: sensors
- 7: Return uprights
- 71: shelf carrying leg
- 8: second moving means
- 9: storage system
- 10: computer system
- 11: communication system
- 12: size detection means
- 13: indication means
- 14: data connections
- 15: forklift to transport objects to/from storage racks

- A: assign object to a storage rack
- D: downwards
- DS: determine the size of an object with the size detection means 13
- G: guiding objects to the assigned storage rack
- GL: ground level
- L, LU: loading / unloading objects into/out of storage racks
- LP: loading position
- MD: minimum distance
- R: removal of unloaded shelves
- RC: recognize available storage space

- RT: returning the shelves to the top section 41
- TS: trigger signal

## Claims

1. A storage rack (1) with multiple movable shelves (2n, 2l, 2u) suitable to be loaded with objects (3) comprising a rack frame with multiple support uprights (4) to guide and support the movable shelves (2n, 21, 2u) along the support uprights (4), wherein the support uprights (4) comprise a top section (41) to store the non-loaded shelves (2n) in a sequence, a storage area (42) below the top section (41) and first moving means (5) to move the movable shelves (2n, 2l) at least downwards (D) along the support uprights (4), wherein unloaded shelves (2u) previously being loaded with objects (3) in a loading position (LP) are able to be removed (R) from the support uprights (4) within the storage area (42) in order to be placed into the top section (41) of the support uprights (4) again, **characterized in that**, the first moving means (5) are adapted to move the non-loaded movable shelf (2n) being in the closest position to the storage area (42) downwards (D) along the support uprights (4) to a loading position (LP) within the storage area (42), in which the movable shelf (2n) is able to be loaded with objects (3), wherein the storage rack (1) comprises sensors (6) in order to adjust the loading position (LP) of the movable shelf (2n, 2l) at a certain minimum distance (MD) above the objects (3) loaded on top of the shelf (21) being underneath the moved shelf (2n).

2. The storage rack (1) as claimed in claim 1,
**characterized in**
**that** the first moving means (5) is adapted to move the shelves (21) loaded with objects above the unloaded shelf (2u) again into the minimum distance (MD) above the objects (3) loaded on top of the shelves (2l) being underneath in response of a trigger signal (TS) after the unloaded shelf (2n) has been removed (R).

3. The storage rack (1) as claimed in claim 1 or 2,
**characterized in**
**that** the first moving means (5) are adapted to move the next non-loaded movable shelf (2n) from the top section (41) into the minimum distance (MD) above the objects (3) loaded on top of the shelf (21) being underneath the moved shelf (2n) in response of a trigger signal (TS) after the underneath shelf (21) has being loaded with objects (3).

4. The storage rack (1) as claimed in any of the preceding claims,
**characterized in**
**that** the storage rack (1) further comprises at least one return upright (7) in order to remove (R) the unloaded shelves (2u) from the storage area (42) of the support uprights (4) and to return (RT) the removed shelves (2u) to the top section (41) of the support uprights (4).

5. The storage rack (1) as claimed in claim 4,
**characterized in**
**that** the at least one return upright (7) comprises a second moving means (8) to move the removed shelves (2u) to the top section (41) of the support uprights (4).

6. The storage rack (1) as claimed in claim 4 or 5,
**characterized in**
**that** the at least one return upright (7) is arranged outside the storage area (42) in order not to affect the loaded shelves (2l) within the storage area (42) during returning (RT) the unloaded shelves (2u) along the return uprights (7).

7. The storage rack (1) as claimed in any of the preceding claims,
**characterized in**
**that** the sensors (6) are arranged as a vertical linear array in at least one of the support uprights (4), preferably with the minimum distance (MD) as the distance between neighbored sensors (6), more preferably the sensors (6) are photoelectric barriers.

8. The storage rack (1) as claimed in any of the preceding claims,
**characterized in**
**that** at least one of the sensors (6) suitable to detect distances is arranged at a sensor side (21) of each of the movable shelves (2n, 2l, 2u), where the sensor side (21) of the movable shelf (2n, 21, 2u) faces downwards (D) at least after entering the storage area (42).

9. The storage rack (1) as claimed in claim 8,
**characterized in**
**that** the sensor side (21) comprises an array of sensors (6), preferably with a distance between neighbored sensors (6) smaller than the minimum size of the objects (3) parallel to the sensor side (21).

10. A storage system (9) comprising at least one storage rack (1) as claimed in claim 1, a computer system (10) connected to the storage rack (1) in order to recognize (RC) an available storage space within the storage rack (1) suitable for being loaded with objects (3) and to assign (A) an object (3) to be loaded into the storage rack (1) having sufficient storage space, and a communication system (11) connected to the computer system (10) in order to guide (G) the to-be-loaded object (3) to the assigned storage rack (1).

11. The storage system (9) as claimed in claim 10,
**characterized in**
**that** the storage system (9) further comprises size detection means (12) connected to the computer system (10) in order to determine the size of the object (3) to be loaded into the storage rack (1) before assigning the object (3) to one of the storage racks (1).

12. The storage system (9) as claimed in claim 10 or 11,
**characterized in**
**that** the storage rack (1) comprises indication means (13) to indicated the assigned storage rack (1) to support guiding the objects (3) to the assigned storage rack (1).

13. A method to operate a storage rack (1) as claimed in claim 1 comprising the steps of
- storing non-loaded movable shelves (2n) able to be loaded with objects (3) in a sequence in a top section (41) of multiple support uprights (4) adapted to guide and support the movable shelves (2n, 21, 2u) along the support uprights (4) of the storage rack (1);
- moving the non-loaded movable shelf (2n) being in the closest position to a storage area (42) of the support uprights (4) below the top section (41) downwards (D) along the support uprights (4) to a loading position (LP) within the storage area (42) with first moving means (5);
- adjusting the loading position (LP) of the movable shelf (2n, 2l) at a certain minimum distance (MD) above the objects (3) loaded on top of the shelf (2l) being underneath the moved shelf (2n) with sensors arranged within the storage rack (1);
- removing unloaded shelves (2u) previously being loaded with objects (3) in its loading position (LP) from the support uprights (4); and
- placing the removed shelves (2u) into the top section (41) of the support uprights (4) again, preferably by returning (RT) the removed shelves (2u) to the top section (41) of the support uprights (4) via at least one return upright (7), more preferably the return upright (7) comprising a second moving means (8) to move the removed shelves (2u) to the top section (41) of the support uprights (4).

14. The method as claimed in claim 13,
**characterized in**
**that** the step of adjusting the loading position (LP) of the movable shelf (2n) is performed with the sensors (6) arranged as a vertical sequence in at least one of the support uprights (3) with the minimum distance (MD) as the distance between neighbored sensors (6), or with sensors (6) arranged at a sensor side (21) of each of the movable shelves (2n, 21, 2u), where the sensor side (21) faces downwards at least after entering the storage area (42).

15. A method to operate a storage system (9) as claimed in claim 10 comprising the steps of
- recognizing (RC) an available space within the storage rack (1) suitable for being loaded with objects (3) with a computer system (10) connected to the storage rack (1);
- assigning (A) an object (3) to be loaded to the storage rack (1) having sufficient space for being loaded with the object (1) by the computer system (10); and
- guiding (G) the objects (3) to the assigned storage rack (1) with support of a communication system (11) connected to the computer system (10).

## Patentansprüche

1. Lagerregal (1) mit mehreren beweglichen Fächern (2n, 21, 2u), die dafür geeignet sind, mit Gegenständen (3) beladen zu werden, wobei das Lagerregal einen Regalrahmen mit mehreren Stützständern (4), um die beweglichen Fächer (2n, 21, 2u) entlang der Stützständer (4) zu führen und zu stützen, umfasst, wobei die Stützständer (4) einen Kopfabschnitt (41), um die unbeladenen Fächer (2n) in einer Folge zu lagern, einen Lagerbereich (42) unter dem Kopfabschnitt (41) und ein erstes Bewegungsmittel (5), um die beweglichen Fächer (2n, 2l) entlang der Stützständer (4) wenigstens nach unten (D) zu bewegen, umfassen, wobei die entladenen Fächer (2u), die zuvor in einer Beladestellung (LP) mit Gegenständen (3) beladen gewesen sind, von den Stützständern (4) innerhalb des Lagerbereichs (42) entnommen werden können (R), um erneut in dem Kopfabschnitt (41) der Stützständer (4) angeordnet zu werden, **dadurch gekennzeichnet, dass** die ersten Bewegungsmittel (5) dafür ausgelegt sind, das unbeladene bewegliche Fach (2n), das in der dem Lagerbereich (42) nächsten Stellung ist, entlang der Stützständer (4) zu einer Beladestellung (LP) innerhalb des Lagerbereichs (42), in der das bewegliche Fach (2n) mit Gegenständen (3) beladen werden kann, nach unten (D) zu bewegen, wobei das Lagerregal (1) Sensoren (6) umfasst, um die Beladestellung (LP) des beweglichen Fachs (2n, 2l) bei einer bestimmten minimalen Entfernung (MD) über den auf das Fach (21) unter dem bewegten Fach (2n) geladenen Gegenständen (3) einzustellen.

2. Lagerregal (1) nach Anspruch 1,
**dadurch gekennzeichnet,**
**dass** das erste Bewegungsmittel (5) dafür ausgelegt ist, die mit Gegenständen beladenen Fächer (21) über dem entladenen Fach (2u) in Ansprechen auf ein Auslösesignal (TS) erneut in die minimale Entfernung (MD) über den auf die Fächer (21) darunter geladenen Gegenständen (3) zu bewegen, nachdem das entladene Fach (2n) entnommen (R) worden ist.

3. Lagerregal (1) nach Anspruch 1 oder 2,
**dadurch gekennzeichnet,**
**dass** die ersten Bewegungsmittel (5) dafür ausgelegt sind, das nächste unbeladene bewegliche Fach (2n) in Ansprechen auf ein Auslösesignal (TS) von dem Kopfabschnitt (41) in die minimale Entfernung (MD) über den auf das Fach (21) unter dem bewegten Fach (2n) geladenen Gegenständen (3) zu bewegen, nachdem das untere Fach (21) mit Gegenständen (3) beladen worden ist.

4. Lagerregal (1) nach einem der vorhergehenden Ansprüche,
**dadurch gekennzeichnet,**
**dass** das Lagerregal (1) ferner wenigstens einen Rückführungsständer (7) umfasst, um die entladenen Fächer (2u) aus dem Lagerbereich (42) der Stützständer (4) zu entnehmen (R) und um die entnommenen Fächer (2u) zu dem Kopfabschnitt (41) der Stützständer (4) zurückzuführen (RT).

5. Lagerregal (1) nach Anspruch 4,
**dadurch gekennzeichnet,**
**dass** der wenigstens eine Rückführungsständer (7) ein zweites Bewegungsmittel (8) umfasst, um die entnommenen Fächer (2u) zu dem Kopfabschnitt (41) der Stützständer (4) zu bewegen.

6. Lagerregal (1) nach Anspruch 4 oder 5,
**dadurch gekennzeichnet,**
**dass** der wenigstens eine Rückführungsständer (7) außerhalb des Lagerbereichs (42) angeordnet ist, um die beladenen Fächer (21) innerhalb des Lagerbereichs (42) während des Zurückführens (RT) der entladenen Fächer (2u) entlang der Rückführungsständer (7) nicht zu beeinflussen.

7. Lagerregal (1) nach einem der vorhergehenden Ansprüche,
**dadurch gekennzeichnet,**
**dass** die Sensoren (6) als eine vertikale lineare Anordnung in wenigstens einem der Stützständer (4), vorzugsweise mit der minimalen Entfernung (MD) als der Entfernung zwischen benachbarten Sensoren (6), angeordnet sind, wobei die Sensoren (6) bevorzugter Lichtschranken sind.

8. Lagerregal (1) nach einem der vorhergehenden Ansprüche,
**dadurch gekennzeichnet,**
**dass** der wenigstens eine der Sensoren (6), der dafür geeignet ist, Entfernungen zu detektieren, auf einer Sensorseite (21) jedes der beweglichen Fächer (2n, 21, 2u) angeordnet ist, wobei die Sensorseite (21) des beweglichen Fachs (2n, 21, 2u) wenigstens nach Eintritt in den Lagerbereich (42) nach unten (D) weist.

9. Lagerregal (1) nach Anspruch 8,
**dadurch gekennzeichnet,**
**dass** die Sensorseite (21) eine Anordnung von Sensoren (6), vorzugsweise mit einer kleineren Entfernung zwischen benachbarten Sensoren (6) als der minimalen Größe der Gegenstände (3) parallel zu der Sensorseite (21), umfasst.

10. Lagersystem (9), das wenigstens ein Lagerregal (1) nach Anspruch 1, ein Computersystem (10), das mit dem Lagerregal (1) verbunden ist, um einen verfügbaren Lagerplatz innerhalb des Lagerregals (1), der dafür geeignet ist, mit Gegenständen (3) beladen zu werden, zu erkennen (RC) und um einen in das Lagerregal (1) mit ausreichend Lagerplatz zu ladenden Gegenstand (3) zuzuweisen (A), und ein Kommunikationssystem (11), das mit dem Computersystem (10) verbunden ist, um den zu ladenden Gegenstand (3) zu dem zugewiesenen Lagerregal (1) zu führen (G), umfasst.

11. Lagersystem (9) nach Anspruch 10,
**dadurch gekennzeichnet,**
**dass** das Lagersystem (9) ferner ein mit dem Computersystem (10) verbundenes Größendetektierungsmittel (12) umfasst, um die Größe des in das Lagerregal (1) zu ladenden Gegenstands (3) zu bestimmen, bevor der Gegenstand (3) einem der Lagerregale (1) zugewiesen wird.

12. Lagersystem (9) nach Anspruch 10 oder 11,
**dadurch gekennzeichnet,**
**dass** das Lagerregal (1) ein Angabemittel (13) umfasst, um das zugewiesene Lagerregal (1) anzugeben, um das Führen der Gegenstände (3) zu dem zugewiesenen Lagerregal (1) zu unterstützen.

13. Verfahren zum Betreiben eines Lagerregals (1) nach Anspruch 1, wobei das Verfahren die folgenden Schritte umfasst:
- Lagern unbeladener beweglicher Fächer (2n), die in einer Folge mit Gegenständen (3) beladen werden können, in einem Kopfabschnitt (41) mehrerer Stützständer (4), die dafür ausgelegt sind, die beweglichen Fächer (2n, 21, 2u) entlang der Stützständer (4) des Lagerregals (1) zu führen und zu stützen;
- Bewegen des unbeladenen beweglichen Fachs (2n), das in der einem Lagerbereich (42) der Stützständer (4) unter dem Kopfabschnitt (41) nächsten Stellung ist, entlang der Stützständer (4) zu einer Beladestellung (LP) innerhalb des Lagerbereichs (42) nach unten (D) mit dem ersten Bewegungsmittel (5);
- Einstellen der Beladestellung (LP) des beweglichen Fachs (2n, 2l) bei einer bestimmten minimalen Entfernung (MD) über den auf das Fach (21) unter dem bewegten Fach (2n) geladenen Gegenständen (3) mit Sensoren, die innerhalb des Lagerregals (1) angeordnet sind;
- Entnehmen entladener Fächer (2u), die zuvor in ihre Beladestellung (LP) mit Gegenständen (3) beladen gewesen sind, von den Stützständern (4); und
- erneutes Anordnen der entnommenen Fächer (2u) in dem Kopfabschnitt (41) der Stützständer (4), vorzugsweise durch Zurückführen (RT) der entnommenen Fächer (2u) zu dem Kopfabschnitt (41) der Stützständer (4) über wenigstens einen Rückführungsständer (7), bevorzugter über den Rückführungsständer (7), der ein zweites Bewegungsmittel (8) zum Bewegen der entnommenen Fächer (2u) zu dem Kopfabschnitt (41) der Stützständer (4) umfasst.

14. Verfahren nach Anspruch 13,
**dadurch gekennzeichnet,**
**dass** der Schritt des Einstellens der Beladestellung (LP) des beweglichen Fachs (2n) mit den als eine vertikale Folge in wenigstens einem der Stützständer (4) mit der minimalen Entfernung (MD) als der Entfernung zwischen benachbarten Sensoren (6) angeordneten Sensoren (6) oder mit den auf einer Sensorseite (21) jedes der beweglichen Fächer (2n, 21, 2u) angeordneten Sensoren (6), wobei die Sensorseite (21) wenigstens nach Eintritt in den Lagerbereich (42) nach unten weist, ausgeführt wird.

15. Verfahren zum Betreiben eines Lagersystems (9) nach Anspruch 10, wobei das Verfahren die folgenden Schritte umfasst:
- Erkennen (RC) eines verfügbaren Platzes innerhalb des Lagerregals (1), der dafür geeignet ist, mit Gegenständen (3) beladen zu werden, mit einem mit dem Lagerregal (1) verbundenen Computersystem (10);
- Zuweisen (A) eines zu ladenden Gegenstands (3) zu dem Lagerregal (1) mit ausreichendem Platz, um mit dem Gegenstand (3) beladen zu werden, durch das Computersystem (10); und
- Führen (G) der Gegenstände (3) zu dem zugewiesenen Lagerregal (1) mit Unterstützung eines mit dem Computersystem (10) verbundenen Kommunikationssystems (11).

## Revendications

1. Rayonnage de stockage (1) avec de multiples étagères mobiles (2n, 21, 2u) convenant à être chargées d'objets (3) comprenant un cadre de rayonnage avec de multiples montants de support (4) pour guider et supporter les étagères mobiles (2n, 21, 2u) le long des montants de support (4), dans lequel les montants de support (4) comprennent une section supérieure (41) pour stocker les étagères non chargées (2n) dans une séquence, une zone de stockage (42) en dessous de la section supérieure (41) et des premiers moyens de déplacement (5) pour déplacer les étagères mobiles (2n, 2l) au moins vers le bas (D) le long des montants de support (4), dans lequel des étagères non chargées (2u) qui ont été précédemment chargées d'objets (3) dans une position de chargement (LP) sont capables d'être retirées (R) des montants de support (4) au sein de la zone de stockage (42) afin d'être de nouveau placées dans la section supérieure (41) des montants de support (4), **caractérisé en ce que** les premiers moyens de déplacement (5) sont adaptés à déplacer l'étagère mobile non chargée (2n) qui est dans la position la plus proche de la zone de stockage (42) vers le bas (D) le long des montants de support (4) vers une position de chargement (LP) au sein de la zone de stockage (42), dans laquelle l'étagère mobile (2n) est capable d'être chargée d'objets (3), dans lequel le rayonnage de stockage (1) comprend des capteurs (6) afin d'ajuster la position de chargement (LP) de l'étagère mobile (2n, 2l) à une certaine distance minimale (MD) au-dessus des objets (3) chargés au-dessus de l'étagère (21) qui est en dessous de l'étagère déplacée (2n).

2. Rayonnage de stockage (1) selon la revendication 1,
**caractérisé en ce**
**que** les premiers moyens de déplacement (5) sont adaptés à déplacer de nouveau les étagères (21) chargées d'objets au-dessus de l'étagère non chargée (2u) dans la distance minimale (MD) au-dessus des objets (3) chargés au-dessus des étagères (21) qui sont en dessous en réponse à un signal de déclenchement (TS) après que l'étagère non chargée (2n) a été retirée (R).

3. Rayonnage de stockage (1) selon la revendication 1 ou 2,
**caractérisé en ce**
**que** les premiers moyens de déplacement (5) sont adaptés à déplacer l'étagère mobile non chargée suivante (2n) de la section supérieure (41) dans la distance minimale (MD) au-dessus des objets (3) chargés au-dessus de l'étagère (21) qui est en dessous de l'étagère déplacée (2n) en réponse à un signal de déclenchement (TS) après que l'étagère en dessous (21) a été chargée d'objets (3).

4. Rayonnage de stockage (1) selon l'une quelconque des revendications précédentes,
**caractérisé en ce**
**que** le rayonnage de stockage (1) comprend en outre au moins un montant de renvoi (7) afin de retirer (R) les étagères non chargées (2u) de la zone de stockage (42) des montants de support (4) et de renvoyer (RT) les étagères retirées (2u) à la section supérieure (41) des montants de support (4).

5. Rayonnage de stockage (1) selon la revendication 4,
**caractérisé en ce**
**que** l'au moins un montant de renvoi (7) comprend un second moyen de déplacement (8) pour déplacer les étagères retirées (2u) vers la section supérieure (41) des montants de support (4).

6. Rayonnage de stockage (1) selon la revendication 4 ou 5,
**caractérisé en ce**
**que** l'au moins un montant de renvoi (7) est agencé en dehors de la zone de stockage (42) afin de ne pas affecter les étagères chargées (21) au sein de la zone de stockage (42) au cours du renvoi (RT) des étagères non chargées (2u) le long des montants de renvoi (7).

7. Rayonnage de stockage (1) selon l'une quelconque des revendications précédentes,
**caractérisé en ce**
**que** les capteurs (6) sont agencés en tant que réseau linéaire vertical dans au moins un des montants de support (4), de préférence avec la distance minimale (MD) comme la distance entre des capteurs voisins (6), plus préférablement les capteurs (6) sont des barrages photoélectriques.

8. Rayonnage de stockage (1) selon l'une quelconque des revendications précédentes,
**caractérisé en ce**
**qu'**au moins un des capteurs (6) convenant à détecter des distances est agencé sur un côté de capteur (21) de chacune des étagères mobiles (2n, 21, 2u), où le côté de capteur (21) de l'étagère mobile (2n, 21, 2u) fait face vers le bas (D) au moins après avoir pénétré dans la zone de stockage (42).

9. Rayonnage de stockage (1) selon la revendication 8,
**caractérisé en ce**
**que** le côté de capteur (21) comprend un réseau de capteurs (6), de préférence avec une distance entre des capteurs voisins (6) inférieure à la taille minimale des objets (3) parallèles au côté de capteur (21).

10. Système de stockage (9) comprenant au moins un rayonnage de stockage (1) selon la revendication 1, un système informatique (10) connecté au rayonnage de stockage (1) afin de reconnaître (RC) un espace de stockage disponible au sein du rayonnage de stockage (1) convenant à être chargé d'objets (3) et d'attribuer (A) un objet (3) devant être chargé dans le rayonnage de stockage (1) ayant suffisamment d'espace de stockage, et un système de communication (11) connecté au système informatique (10) afin de guider (G) l'objet devant être chargé (3) vers le rayonnage de stockage attribué (1).

11. Système de stockage (9) selon la revendication 10,
**caractérisé en ce**
**que** le système de stockage (9) comprend en outre un moyen de détection de taille (12) connecté au système informatique (10) afin de déterminer la taille de l'objet (3) devant être chargé dans le rayonnage de stockage (1) avant d'attribuer l'objet (3) à un des rayonnages de stockage (1).

12. Système de stockage (9) selon la revendication 10 ou 11,
**caractérisé en ce**
**que** le rayonnage de stockage (1) comprend des moyens d'indication (13) pour indiquer le rayonnage de stockage attribué (1) pour supporter le guidage des objets (3) vers le rayonnage de stockage attribué (1).

13. Procédé pour opérer un rayonnage de stockage (1) selon la revendication 1, comprenant les étapes consistant à
- stocker des étagères mobiles non chargées (2n) capables d'être chargées d'objets (3) dans une séquence dans une section supérieure (41) de multiples montants de support (4) adaptée à guider et supporter les étagères mobiles (2n, 21, 2u) le long des montants de support (4) du rayonnage de stockage (1) ;
- déplacer l'étagère mobile non chargée (2n) qui est dans la position la plus proche d'une zone de stockage (42) des montants de support (4) en dessous de la section supérieure (41) vers le bas (D) le long des montants de support (4) vers une position de chargement (LP) au sein de la zone de stockage (42) avec les premiers moyens de déplacement (5) ;
- ajuster la position de chargement (LP) de l'étagère mobile (2n, 2l) à une certaine distance minimale (MD) au-dessus des objets (3) chargés au-dessus de l'étagère (21) qui est en dessous de l'étagère déplacée (2n) avec des capteurs agencés au sein du rayonnage de stockage (1) ;
- retirer des étagères non chargées (2u) qui ont été précédemment chargées d'objets (3) dans leur position de chargement (LP) des montants de support (4) ; et
- placer de nouveau les étagères retirées (2u) dans la section supérieure (41) des montants de support (4), de préférence en renvoyant (RT) les étagères retirées (2u) à la section supérieure (41) des montants de support (4) par le biais d'au moins un montant de renvoi (7), plus préférablement le montant de renvoi (7) comprenant un second moyen de déplacement (8) pour déplacer les étagères retirées (2u) vers la section supérieure (41) des montants de support (4).

14. Procédé selon la revendication 13,
**caractérisé en ce**
**que** l'étape d'ajustement de la position de chargement (LP) de l'étagère mobile (2n) est réalisée avec les capteurs (6) agencés en tant que séquence verticale dans au moins un des montants de support (4) avec la distance minimale (MD) comme la distance entre des capteurs voisins (6), ou avec des capteurs (6) agencés sur un côté de capteur (21) de chacune des étagères mobiles (2n, 21, 2u), où le côté de capteur (21) fait face vers le bas au moins après avoir pénétré dans la zone de stockage (42).

15. Procédé pour opérer un système de stockage (9) selon la revendication 10, comprenant les étapes consistant à
- reconnaître (RC) un espace disponible au sein du rayonnage de stockage (1) convenant à être chargé d'objets (3) avec un système informatique (10) connecté au rayonnage de stockage (1) ;
- attribuer (A) un objet (3) devant être chargé au rayonnage de stockage (1) ayant suffisamment d'espace pour être chargé de l'objet (3) par le système informatique (10) ; et
- guider (G) les objets (3) vers le rayonnage de stockage attribué (1) avec le support d'un système de communication (11) connecté au système informatique (10).
